# EUROPEAN PATENT SPECIFICATION

(11) **EP 4 213 164 B1**
(45) Date of publication and mention of the grant of the patent: **17.04.2024**
(21) Application number: 22151983.8
(22) Date of filing: 18.01.2022
(51) Int. Cl.: H01F 1/047, H01F 41/02, C22C 22/00

(54) **PERMANENT MAGNET MATERIAL**
DAUERMAGNETMATERIAL
MATÉRIAU D'AIMANT PERMANENT

(43) Date of publication of application: 19.07.2023
(73) Proprietor: Airbus SAS, 31707 Blagnac (FR)
(72) Inventor: PALM, Frank, 82024 Taufkirchen (DE)
(74) Representative: LKGLOBAL Lorenz & Kopf Patentanwalt Attorney at Law PartG mbB

(56) References cited:
- WO-A1-2019/109135
- WO-A2-2008/048277
- KUO P C ET AL: "Fabrication and magnetic properties of manganese-aluminium permanent magnets", JOURNAL OF MAGNETISM AND MAGNETIC MATERIALS, ELSEVIER, AMSTERDAM, NL, vol. 115, no. 2-3, 2 September 1992 (1992-09-02), pages 183-186, XP025489810, ISSN: 0304-8853, DOI: 10.1016/0304-8853(92)90053-Q [retrieved on 1992-09-02]

## Description

### Field of the invention:

The present invention relates to a permanent magnet material based on a manganese-aluminum alloy which further comprises scandium. The invention also relates to a method for producing such permanent magnet material as well as the use of the permanent magnet material for producing a permanent magnet and for producing an electric motor and/or an electric power generating device. Moreover, the invention relates to an electric motor comprising the permanent magnet material, an electric power generating device comprising the permanent magnet material, and an aircraft comprising the permanent magnet material or the electric motor or the electric power generating device of the present invention.

### Background of the invention:

Permanent magnets are widely used for conversion between electricity and mechanical energy, such as in electric motors, and *vice versa,* such as in electric energy generating devices. Future electric propulsion solutions as well energy generator devices require permanent magnetic materials that can fulfil highest degrees of magnetic and electrical performance in combination with minimum weight, good sustainability and the capability to create function and topology optimized geometries.

Permanent magnet material based on manganese-aluminum alloys (Mn-AI at ca. 50%/50% (mole fraction)) has been developed in the middle of the last century using powder metallurgical manufacturing concepts. These alloys are much lighter than incumbent and widely used cobalt-samarium (Co-Sm) alloy based or neodymium-iron-boron (Nd-Fe-B) alloy based powder magnet materials. However, in order to create the desired magnetic properties in Mn-AI permanent magnets complex thermo-mechanical heat treatments are necessary. Due to their complexity, these treatment procedures are only suitable to manufacture simple semi-products but are incompatible with the strong request of specific future tailored designs for permanent magnets required in electric propulsion solutions.

Many permanent magnet materials which are currently widely used contain at least some amounts of various rare earth elements which have been found to improve or even to ensure the magnetic properties of the resulting material. However, there are world-wide only a very limited number of suppliers of the required rare earth elements and in recent times the supply situation and in particular the purchasing costs of the rare earth elements were quite volatile. Moreover, the mining and production of rare earth metals is often connected with severe environmental burden.

Therefore, there is a need for new permanent magnet materials which overcome the above drawbacks of the known permanent magnet materials, i.e. for a new permanent magnet material which fulfils highest degrees of magnetic and electrical performance in combination with minimum weight, good sustainability and the capability to create function and topology optimized geometries. Moreover, it would be particularly desirable if the new permanent magnet material is free of rare earth metals.

So called direct manufacturing concepts like LPB-F (laser powder bed fusion; also called in short "3D printing") have been found to be particularly suitable to provide components in required topology optimized geometries. Hence, it would be further desirable that direct manufacturing concepts like LPB-F would be applicable for the new permanent magnet materials because such manufacturing concepts will allow to prepare for instance electrical motors or energy generators according to needs with highest performance densities and minimum weight. Furthermore, there is a need for a method to produce such new permanent magnet materials.

WO 2008/048277 A2 discloses an example of a Mn_{X}Al_{Y}Do_{Z} alloy including 80% of a magnetic τ-phase, with Do being selected from the group consisting of carbon, boron and rare earth metals in a range of 0-3 atomic%.

### Brief description of the drawing:

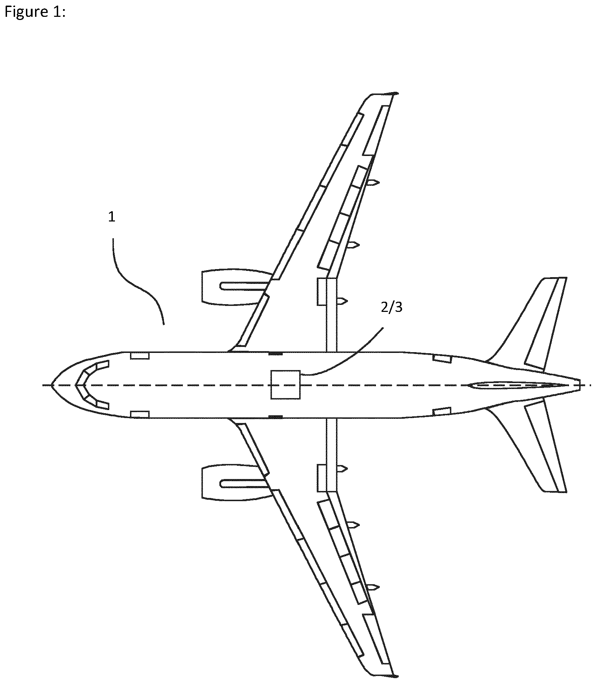

Figure 1 shows a schematic view of an aircraft (1) comprising an electric motor (2) comprising the permanent magnetic material of the present invention or an electric energy generating device (3) of the present invention.

### Summary of the invention:

The present invention provides a permanent magnetic material comprising 40.0 to 59.8 % manganese (Mn), 40.0 to 59.8 % aluminum (Al), and 0.2 to 2.0 % scandium (Sc), wherein the percentages relate to the mole fractions of the respective component in the permanent magnetic material.

In one embodiment of the present invention, the permanent magnetic material comprises 51.0 to 57.8 % manganese, 42.0 to 48.8 % aluminum, and 0.2 to 2.0 % scandium.

In one embodiment of the present invention, the content of scandium in the permanent magnetic material is 0.5 to 1.5 %, preferably 0.8 to 1.2 %, and more preferably is 0.9 to 1.1 %, such as 1.0 %.

In one embodiment of the present invention, the permanent magnetic material is free of rare earth elements.

In one embodiment of the present invention, the permanent magnetic material consists of 40.0 to 59.8 % manganese, 40.0 to 59.8 % aluminum, 0.2 to 2.0 % scandium, and 0.5 % or less of unavoidable impurities.

In one embodiment of the present invention, the permanent magnetic material consists of 51.0 to 57.8 % manganese, 42.0 to 48.8 % aluminum, 0.2 to 2.0 % scandium, and 0.5 % or less of unavoidable impurities.

In one embodiment of the present invention, the content of scandium in the permanent magnetic material is 0.5 to 1.5 %, preferably 0.8 to 1.2 %, and more preferably is 0.9 to 1.1 %, such as 1.0 %.

In one embodiment of the present invention, the permanent magnetic material is free of rare earth elements.

The present invention further provides a method for producing a permanent magnetic material of the present invention comprising the steps of a) producing of a liquid melt comprising manganese, aluminum, and scandium in the respective mole fractions; b) cooling the melt by rapid solidification with a cooling rate of > 1,000 Kelvin/second, preferably > 10,000 Kelvin/second, and more preferably > 1,000,000 Kelvin/second; and c) optionally a thermal post-treatment in which the obtained permanent magnetic material is treated in the range from 150 to 850 °C.

The present invention further provides a use of the permanent magnetic material of the present invention for the preparation of a permanent magnet.

The present invention further provides a use of the permanent magnetic material of the present invention for the preparation of an electric motor and/or an electric power generating device.

The present invention further provides an electric motor comprising the permanent magnetic material of the present invention.

The present invention further provides an electric power generating device comprising the permanent magnetic material of the present invention.

The present invention further provides an aircraft, comprising the permanent magnetic material of the present invention or the electric motor of the present invention or the electric power generating device of the present invention.

### Detailed description:

The present invention provides a permanent magnetic material comprising 40.0 to 59.8 % manganese, 40.0 to 59.8 % aluminum; and 0.2 to 2.0 % scandium, wherein the percentages relate to the mole fractions of the respective component in the permanent magnetic material. Generally, in the permanent magnetic material disclosed herein the total percentages of all components of the permanent magnetic material sum up to 100.0 %.

A permanent magnetic material is characterized in that it has a permanent magneticity, i.e. the magneticity of the permanent magnetic material cannot be switched off and on by applying external forces such as for instance electricity.

The permanent magnetic material of the present invention is an alloy comprising as essential components manganese, aluminum, and scandium.

The permanent magnetic material comprises 40.0 to 59.8 % manganese, preferably 45.0 to 59.8 % manganese, such as 45.0 to 59.5 % or 45.0 to 59.2 % or even 45.0 to 59.1 % manganese, more preferably 50 to 59 % manganese, even more preferably 51 to 58 % manganese, such as 53 to 57 %, and most preferably 54 to 56 % manganese.

The permanent magnetic material further comprises 40.0 to 59.8 % aluminum, such as 40.0 to 59.5 % or 40.0 to 59.2 % or even 40.0 to 59.1 % aluminum, preferably 40.0 to 55 % aluminum, more preferably 41 to 50 % aluminum, even more preferably 42 to 49 % aluminum, such as 43 to 47 %, and most preferably 44 to 46 % aluminum.

The permanent magnetic material further comprises 0.2 to 2.0 % scandium, preferably 0.5 to 1.5 % scandium, more preferably 0.7 to 1.3 % scandium, even more preferably 0.8 to 1.2 % scandium, and most preferably 0.9 to 1.1 % scandium, such as 1.0 % scandium. Without wishing to be bound by theory, it is assumed that the scandium modifies the microstructure of the manganese-aluminum alloy by slightly deforming it such that a more uniform and finer microstructure is obtained resulting in enhanced permanent magneticity of the permanent magnet material. Moreover, it was found that the addition of scandium improves the thermal durability of the obtained permanent magnetic material such that the permanent magnetic material may also readily be used in high-temperature applications.

In a preferred permanent magnetic material comprises 51.0 to 57.8 % manganese, 42.0 to 48.8 % aluminum, and 0.2 to 2.0 % scandium. A more preferred permanent magnetic material comprises 53.0 to 56.5 % manganese, 43.0 to 46.5 % aluminum, and 0.5 to 1.5 % scandium.

Unless explicitly stated otherwise, the percentages (% values) given above and herein in general for any amounts of the components in the permanent magnetic material always relate to the mole fractions of the respective component in the permanent magnetic material. These mole fractions are also known as molar fractions or amount fractions and are defined as unit of the amount of a constituent (expressed in moles) divided by the total amount of all constituents in a mixture (also expressed in moles). In other words, the percentages given herein describe the percentual contribution of the number (or moles) of atoms of one component to the total number (or moles) of all atoms (which equals 100 %) in the permanent magnetic material. For instance, if a permanent magnet material comprises 55 % manganese, 44 % aluminum, and 1 % scandium, this means that 55 % of all atoms in the permanent magnetic material are manganese atoms, 44 % of all atoms in the permanent magnetic material are aluminum atoms, and 1 % of all atoms in the permanent magnetic material are scandium atoms.

Albeit the permanent magnet material may comprise in principle any further elements, such as for instance carbon (C), boron (B), silicon (Si), phosphor (P), and sulfur (S), it is preferred that the permanent magnet material only comprises the components manganese, aluminum, and scandium.

If the permanent magnet material comprises one or more further elements, they are contained individually in an amount of 0.5 to 3.0 %, preferably of 1.0 to 2.5 % and on the whole in an amount of 0.5 to 10.0 %, preferably 0.5 to 5.0% or even 1.0 to 2.5 %. For instance, the permanent magnet material may comprise 0.5 to 3.0 % carbon (C), such as 1.0 to 2.5 % or even 1.5 to 2.5 % carbon.

The permanent magnet material may also comprise unavoidable impurities. Impurities may be present individually of at most 0.1 %, and on the whole of at most 0.5 %. Preferably, the total amount of impurities in the permanent magnet material is 0.4 % or less, such as 0.3 % or less or 0.2% or less, and even more preferably is 0.1 % or less. Preferred individual amounts of impurities are 0.05 % or less, such as 0.03 % or less or even 0.02 % or less. Also these percentages relate to the mole fractions of the respective impurity in the permanent magnetic material.

In principle any element may be present as an unavoidable impurity in the permanent magnet material depending on the precursors used to prepare the permanent magnet material. However, typical impurities which may be present in the permanent magnet material are silicon (Si), iron (Fe), and/or nickel (Ni).

Preferably, the permanent magnetic material is free of rare earth elements. The term "free of" means in this context that less than 0.1 %, preferably less 0.07 %, and more preferably less than 0.05 % or even less than 0.01% of rare earth metals in total are present in the permanent magnetic material. Also these percentages relate to the mole fractions of the respective rare earth element in the permanent magnetic material. In some embodiments, the permanent magnetic material does not contain any rare earth metals at all.

In a preferred embodiment, the permanent magnetic material consists of 40.0 to 58.8 % manganese, 40.0 to 58.8 % aluminum, 0.2 to 2.0 % scandium, and 0.5 % or less of unavoidable impurities. Preferred amount ranges of the components magnesium, aluminum, scandium, and unavoidable impurities are as defined above.

In a further preferred embodiment of the present invention, the permanent magnetic material consists of 51.0 to 57.8 % manganese, 42.0 to 48.8 % aluminum, 0.2 to 2.0 % scandium, and 0.5 % or less of unavoidable impurities.

In an even further preferred embodiment of the present invention, the permanent magnetic material consists of 53.0 to 56.5 % manganese, 43.0 to 46.5 % aluminum, 0.5 to 1.5 % scandium, and 0.3 % or less of unavoidable impurities.

In an even further preferred embodiment of the present invention, the permanent magnetic material consists of 53.0 to 56.1 % manganese, 43.0 to 46.1 % aluminum, 0.9 to 1.1 % scandium, and 0.3 % or less of unavoidable impurities.

In an even further preferred embodiment of the present invention, the permanent magnetic material consists of 53.0 to 56.1 % manganese, 43.0 to 46.1 % aluminum, 0.9 to 1.1 % scandium, and 0.3 % or less of unavoidable impurities, and the permanent magnetic material is free of rare earth elements. The term "free of" is defined as above.

The present invention further provides a method for producing a permanent magnetic material of the present invention comprising the steps of
a) producing of a liquid melt comprising manganese, aluminum, and scandium in the respective mole fractions;
b) cooling the melt by rapid solidification with a cooling rate of > 1,000 Kelvin/second (K/sec), preferably > 10,000 K/sec, and more preferably > 1,000,000 K/sec; and
c) optionally a thermal post-treatment in which the obtained permanent magnetic material is treated in the range from 150 to 850 °C.

According to step a) of the method of the invention, a liquid melt comprising manganese, aluminum, and scandium in the respective mole fractions is produced. With the help of this step a) homogeneous distribution of the components in the permanent magnet material can be achieved.

For preparing such a melt, for instance suitable amounts of individual master alloys comprising the respective manganese, aluminum, and scandium or in principle also the pure elements as such are mixed and heated. Suitable manganese master alloys, aluminum master alloys, and scandium master alloys are known by the skilled person and are commercially available, for instance from KBM Affilips, Delfzijl, The Netherlands. Typically, the master alloys are provided in ingot or wire form. Also the pure elements manganese, aluminum, and scandium are commercially available.

The master alloys and/or pure elements can be mixed and are then heated so to produce the liquid melt. The melts can be produced using a large number of different heat sources which are known in the art. The melts may be produced in step a) in a furnace, burner or by means of a laser beam, an electron beam or an electric arc. A chemical, exothermic reaction can also be used, or the melts are produced capacitively, conductively or inductively. Any combination of these heat sources can also be used to produce the melts.

However, preferred is the use of laser powder bed fusion (LPB-F) techniques as these techniques allows for the direct creation of complex geometries. It has been found that the permanent magnet material described herein is particularly suitable to be used in LPB-F techniques as it can be readily manufactured in basically any geometry so that the production of permanent magnets having any required and optimized geometry of the permanent magnetic material to stimulate best magnetic performance is possible. In such LPB-F techniques a laser scans a predefined pattern of a material to be melted, such as the permanent magnetic material of the present invention, with a laser scanning velocity of up to 1,000 mm/sec, and heats and melts material to be melted, such as the permanent magnetic material of the present invention, at discrete portions.

The aluminum master alloys are preferably melted in step c) at a temperature of at least 1200°C, preferably in a temperature range from 1300°C to 1,500°C.

According to step b) of the method according to the invention, the liquid melt in step a) is cooled with a solidification rate that is > 1,000 Kelvin/second (K/sec), preferably > 10,000 K/sec, and more preferably > 1,000,000 K/sec.

For instance, the cooling in step b) is performed to ≤ 80 °C, preferably to
≤ 60 °C, and more preferably to room temperature.

It is known to a person skilled in the art that the solidification rate should be adapted to the diameter of the produced permanent magnet material or the part/workpiece made therefrom and is dependent on the heat dissipation of the produced permanent magnet material. A person skilled in the art will therefore adapt the solidification rate to the produced permanent magnet material accordingly, insofar as possible. In one embodiment of the present invention, the cooling in step b) is performed with a solidification rate which is 1,000 to 10,000,000 K/sec, and preferably 5,000 to 10,000,000 K/sec. By way of example, the cooling in step c) is performed with a solidification step which is 10,000 to 5,000,000 K/sec, preferably 100,000 to 5,000,000 K/sec, most preferably 1,000,000 to 10,000,000 K/sec. Such a solidification rate in particular has the advantage that the homogenized melt is rapidly solidified as it is, i.e. so that no inhomogeneous and different intermetallic phases are formed in the solidified permanent magnet material. Any inhomogeneity in the permanent magnet material will likely deteriorate the magnetic performance thereof.

Methods for cooling permanent magnet material and workpieces made therefrom are known in the prior art. By way of example, the permanent magnet material can be cooled in a defined manner with the aid of cooling in moving air or by quenching in water. Alternatively, the cooling in step b) is performed in the open air.

However, it is preferred that the cooling step is performed when using LPB-F techniques. In these techniques, as already explained above, a laser scans a predefined pattern of a material to be melted with a laser scanning velocity of up to 1,000 mm/sec and heats and melts the permanent magnetic material at discrete portions. Once the laser has moved away from one of these discrete portions, the molten permanent magnetic material immediately solidifies with very high cooling rates as only very small amounts of molten material has to solidify. Hence, with LPB-F techniques it is possible to rapidly produce the permanent magnet material, for instance in the form of a workpiece, layer wise and in any desired 3D geometry.

In an optional step c) of the method according to the invention, the permanent magnet material obtained in step b) can be subjected to a thermal post-treatment in a temperature range from 150 to 850 °C.

The thermal post-treatment according to optional step c) of the method according to the invention can also be performed in a number of stages and/or steps.

The permanent magnet material obtained in step b) is preferably subjected to a thermal post-treatment in a temperature range of from 200°C to 600 °C, more preferably in a temperature range of from 250°C to 450 °C, and even more preferably in a temperature range of from 300°C to 350 °C.

The thermal post-treatment according to optional step c) may be performed from 10 min to 100 h, preferably from 30 min to 50 h, even more preferably from 1 h to 10 h, and most preferably from 2 h to 8 h.

In one embodiment of the present invention, the thermal post-treatment according to optional step c) is performed in a two-stage process. By way of example, the first step of the heat treatment can be performed in a temperature range of from 100 to 700 °C, for example in a temperature range from 200 to 600 °C, for a period of from 30 min to 5 h and the second step of the heat treatment can be performed in a temperature range of from 200 to 500 °C for a period of from 1h to 8 h.

For instance, the thermal post-treatment according to optional step c) may be performed in a first step at 250°C for 4 h and in a second step at 350°C for 2 h. Alternatively, the thermal post-treatment according to optional step c) may also be performed in a first step at 600°C for 1 h and in a second step at 450°C for 4 h. In an even further alternative, the thermal post-treatment according to optional step c) may also be performed in a first step at 350°C for 1 h and in a second step at 275°C for 4 h.

For instance, the thermal post-treatment can be performed in air, inert gas, or in a vacuum. For instance, the thermal post-treatment according to optional step c) of the method according to the invention is performed in inert gas, such as nitrogen or argon, at temperatures between 150 and 850 °C, for example at temperatures between 200 and 600 °C, for a period of from 10 min to 10 h.

In one embodiment of the present invention, the thermal post-treatment according to optional step c) of the method according to the invention is performed directly after step b), i.e. the thermal post-treatment according to step b) of the method according to the invention is carried out directly with the permanent magnetic material obtained in step b). In other words, if a thermal post-treatment according to step c) is carried out, the method according to the invention is preferably carried out without one or more further method steps between the method steps b) and c). Alternatively, the optional thermal post-treatment according to step c) of the method according to the invention is performed after step b), but at a later moment in time, i.e. the thermal post-treatment according to step c) of the method according to the invention is carried out with the permanent magnetic material obtained in step b), but not immediately after step b). In other words, the method according to the invention is carried out without one or more further method steps between the method steps b) and c).

In one embodiment of the present invention, the thermally post-treated permanent magnet material obtained in step c) can be subjected to a further cooling.

By way of example, the thermally post-treated permanent magnet material obtained in step c) is cooled to room temperature. In one embodiment, the thermally post-treated permanent magnet material obtained in step c) is cooled to room temperature in one step. Alternatively, the thermally post-treated permanent magnet material obtained in step c) is cooled to room temperature in a number of steps. By way of example, the thermally post-treated permanent magnet material obtained in step c) is cooled to a defined temperature below the thermal post-treatment temperature in step c), followed by a cooling in the open air to room temperature.

In one embodiment of the present invention, the thermally post-treated permanent magnet material obtained in step c) is cooled to room temperature with a cooling rate which is ≥10 K/sec, and preferably ≥10 to 20,000 K/sec. By way of example, the thermally post-treated permanent magnet material is cooled to room temperature with a cooling rate in a range of ≥20 K/sec or in a range from 20 K/sec to 1,000 K/sec.

Methods for cooling thermally post-treated permanent magnet materials are known in the art. For instance, the thermally post-treated permanent magnet material can be cooled in a defined manner to room temperature with the aid of cooling in moving air or by quenching in water. Alternatively, the thermally post-treated permanent magnet material obtained in step c) is cooled to room temperature in the open air.

The present invention further provides a use of the permanent magnetic material of the present invention for the preparation of a permanent magnet. Such magnetic materials can be used for basically any application of magnetic materials, such as in particular for the preparation of electric motors or electric power producing devices.

Thus, the present invention further provides a use of the permanent magnetic material of the present invention for the preparation of an electric motor and/or an electric power generating device, preferably of an electric motor.

The present invention further provides an electric motor comprising the permanent magnetic material of the present invention.

The present invention further provides an electric power generating device comprising the permanent magnetic material of the present invention.

As shown in Figure 1 the present invention further provides an aircraft (1) comprising the permanent magnetic material of the present invention or the electric motor of the present invention (2) comprising the permanent magnetic material of the present invention or the electric power generating device (3) of the present invention comprising the permanent magnetic material of the present invention.

## Claims

1. Permanent magnetic material comprising
40.0 to 59.8 % manganese;
40.0 to 59.8 % aluminum;
wherein the percentages relate to the mole fractions of the respective component in the permanent magnetic material,
**characterised by** further comprising
0.2 to 2.0 % scandium.

2. Permanent magnetic material according to claim 1, comprising
51.0 to 57.8 % manganese;
42.0 to 48.8 % aluminum; and
0.2 to 2.0% scandium.

3. Permanent magnetic material according to claim 1 or 2, wherein the content of scandium is 0.5 to 1.5 %, preferably 0.8 to 1.2 %, and more preferably is 0.9 to 1.1 %.

4. Permanent magnetic material according to any of claims 1 to 3, which is free of rare earth elements.

5. Permanent magnetic material according to claim 1, consisting of
40.0 to 59.8 % manganese;
40.0 to 59.8 % aluminum;
0.2 to 2.0 % scandium, and
0.5 % or less of unavoidable impurities.

6. Permanent magnetic material according to claim 5, consisting of
51.0 to 57.8 % manganese;
42.0 to 48.8 % aluminum;
0.2 to 2.0 % scandium; and
0.5 % or less of unavoidable impurities.

7. Permanent magnetic material according to claim 5 or 6, wherein the content of scandium is 0.5 to 1.5%, preferably 0.8 to 1.2 %, and more preferably is 0.9 to 1.1 %.

8. Permanent magnetic material according to any of claims 5 to 7, which is free of rare earth elements.

9. Method for producing a permanent magnetic material according to any of claims 1 to 8 comprising the steps
a) producing of a liquid melt comprising manganese, aluminum, and scandium in the respective mole fractions;
b) cooling the melt by rapid solidification with a cooling rate of > 1,000 Kelvin/second, preferably > 10,000 Kelvin/second, and more preferably > 1,000,000 Kelvin/second; and
c) optionally a thermal post-treatment in which the obtained permanent magnetic material is treated in the range from 150 to 850 °C.

10. Use of the permanent magnetic material according to any of claims 1 to 8 for the preparation of a permanent magnet.

11. Use of the permanent magnetic material according to any of claims 1 to 8 for the preparation of an electric motor and/or an electric power generating device.

12. Electric motor comprising the permanent magnetic material according to any of claims 1 to 8.

13. Electric power generating device comprising the permanent magnetic material according to any of claims 1 to 8.

14. Aircraft, comprising the permanent magnetic material according to any of claims 1 to 8 or the electric motor of claim 12 or the electric power generating device of claim 13.

## Patentansprüche

1. Permanentmagnetisches Material, umfassend
40,0 bis 59,8 % Mangan;
40,0 bis 59,8 % Aluminium;
wobei die Prozentwerte auf die Molanteile der entsprechenden Komponente in dem permanentmagnetischen Material bezogen sind, **gekennzeichnet durch** ferner Umfassen von 0,2 bis 2,0 % Scandium.

2. Permanentmagnetisches Material gemäß Anspruch 1, umfassend
51,0 bis 57,8 % Mangan;
42,0 bis 48,8 % Aluminium; und
0,2 bis 2,0 % Scandium.

3. Permanentmagnetisches Material gemäß Anspruch 1 oder 2, wobei der Gehalt an Scandium 0,5 bis 1,5 %, vorzugsweise 0,8 bis 1,2 % und bevorzugter 0,9 bis 1,1 % beträgt.

4. Permanentmagnetisches Material gemäß einem der Ansprüche 1 bis 3, das frei von Seltenerdelementen ist.

5. Permanentmagnetisches Material gemäß Anspruch 1, bestehend aus
40,0 bis 59,8 % Mangan;
40,0 bis 59,8 % Aluminium;
0,2 bis 2,0 % Scandium; und
0,5 % oder weniger an unvermeidbaren Verunreinigungen.

6. Permanentmagnetisches Material gemäß Anspruch 5, bestehend aus
51,0 bis 57,8 % Mangan;
42,0 bis 48,8 % Aluminium;
0,2 bis 2,0 % Scandium; und
0,5 % oder weniger an unvermeidbaren Verunreinigungen.

7. Permanentmagnetisches Material gemäß Anspruch 5 oder 6, wobei der Gehalt an Scandium 0,5 bis 1,5 %, vorzugsweise 0,8 bis 1,2 % und bevorzugter 0,9 bis 1,1 % beträgt.

8. Permanentmagnetisches Material gemäß einem der Ansprüche 5 bis 7, das frei von Seltenerdelementen ist.

9. Verfahren zur Herstellung eines permanentmagnetischen Materials gemäß einem der Ansprüche 1 bis 8, umfassend die Schritte
a) Herstellen einer flüssigen Schmelze, die Mangan, Aluminium und Scandium in den entsprechenden Molanteilen umfasst;
b) Abkühlen der Schmelze durch schnelles Erstarren mit einer Kühlrate von > 1.000 Kelvin/Sekunde, vorzugsweise > 10.000 Kelvin/Sekunde und bevorzugter > 1,000,000 Kelvin/Sekunde; und
c) gegebenenfalls eine thermische Nachbehandlung, bei der das erhaltene permanentmagnetische Material in dem Bereich von 150 bis 850 °C behandelt wird.

10. Verwendung des permanentmagnetischen Materials gemäß einem der Ansprüche 1 bis 8 für die Herstellung eines Permanentmagneten.

11. Verwendung des permanentmagnetischen Materials gemäß einem der Ansprüche 1 bis 8 für die Herstellung eines Elektromotors und/oder einer Elektrizitätserzeugungsvorrichtung.

12. Elektromotor, umfassend das permanentmagnetische Material gemäß einem der Ansprüche 1 bis 8.

13. Elektrizitätserzeugungsvorrichtung, umfassend das permanentmagnetische Material gemäß einem der Ansprüche 1 bis 8.

14. Luftfahrzeug, umfassend das permanentmagnetische Material gemäß einem der Ansprüche 1 bis 8 oder den Elektromotor gemäß Anspruch 12 oder die Elektrizitätserzeugungsvorrichtung gemäß Anspruch 13.

## Revendications

1. Matériau magnétique permanent comprenant
40,0 à 59,8 % de manganèse ;
40,0 à 59,8 % d'aluminium ;
dans lequel les pourcentages se rapportent aux fractions molaires du constituant respectif dans le matériau magnétique permanent, **caractérisé en ce qu'**il comprend en outre 0,2 à 2,0 % de scandium.

2. Matériau magnétique permanent selon la revendication 1, comprenant
51,0 à 57,8 % de manganèse ;
42,0 à 48,8 % d'aluminium ; et
0,2 à 2,0 % de scandium.

3. Matériau magnétique permanent selon la revendication 1 ou 2, dans lequel la teneur en scandium est de 0,5 à 1,5 %, de préférence 0,8 à 1,2 %, et mieux encore est de 0,9 à 1,1 %.

4. Matériau magnétique permanent selon l'une quelconque des revendications 1 à 3, qui est dépourvu de terres rares.

5. Matériau magnétique permanent selon la revendication 1, consistant en
40,0 à 59,8 % de manganèse ;
40,0 à 59,8 % d'aluminium ;
0,2 à 2,0 % de scandium ; et
0,5 % ou moins d'impuretés inévitables.

6. Matériau magnétique permanent selon la revendication 5, consistant en
51,0 à 57,8 % de manganèse ;
42,0 à 48,8 % d'aluminium ;
0,2 à 2,0 % de scandium ; et
0,5 % ou moins d'impuretés inévitables.

7. Matériau magnétique permanent selon la revendication 5 ou 6, dans lequel la teneur en scandium est de 0,5 à 1,5 %, de préférence 0,8 à 1,2 %, et mieux encore est de 0,9 à 1,1 %.

8. Matériau magnétique permanent selon l'une quelconque des revendications 5 à 7, qui est dépourvu de terres rares.

9. Procédé de production d'un matériau magnétique permanent selon l'une quelconque des revendications 1 à 8 comprenant les étapes suivantes :
a) production d'une masse fondue liquide comprenant du manganèse, de l'aluminium et du scandium dans les fractions molaires respectives ;
b) refroidissement de la masse fondue par solidification rapide avec une vitesse de refroidissement > 1000 kelvins/seconde, de préférence > 10 000 kelvins/seconde, et mieux encore > 1 000 000 kelvins/seconde ; et
c) éventuellement, post-traitement thermique dans lequel le matériau magnétique permanent obtenu est traité dans la plage de 150 à 850 °C.

10. Utilisation du matériau magnétique permanent selon l'une quelconque des revendications 1 à 8 pour la préparation d'un aimant permanent.

11. Utilisation du matériau magnétique permanent selon l'une quelconque des revendications 1 à 8 pour la préparation d'un moteur électrique et/ou d'un dispositif produisant de l'énergie électrique.

12. Moteur électrique comprenant le matériau magnétique permanent selon l'une quelconque des revendications 1 à 8.

13. Dispositif produisant de l'énergie électrique comprenant le matériau magnétique permanent selon l'une quelconque des revendications 1 à 8.

14. Aéronef, comprenant le matériau magnétique permanent selon l'une quelconque des revendications 1 à 8, ou le moteur électrique de la revendication 12, ou le dispositif produisant de l'énergie électrique de la revendication 13.
